# EUROPÄISCHE PATENTSCHRIFT

(11) **EP 2 166 390 B1**
(45) Veröffentlichungstag und Bekanntmachung des Hinweises auf die Patenterteilung: **13.02.2013**
(21) Anmeldenummer: 09012012.2
(22) Anmeldetag: 22.09.2009
(51) Int. Cl.: G02B 6/44

(54) **Lichtwellenleiterkabel, insbesondere Lichtwellenleiter-Schienenfusskabel**
Fibre optic cable, in particular fibre optic rail base cable
Câble à fibres optiques, notamment câble de patin de rail optique

(30) Priorität: 23.09.2008 DE 202008012664 U; 11.12.2008 DE 102008061682
(43) Veröffentlichungstag der Anmeldung: 24.03.2010
(73) Patentinhaber: Bayerische Kabelwerke AG, 91154 Roth (DE)
(72) Erfinder: Lutter, Reinhard, 90425 Nürnberg (DE); Wolfsberger, Friedrich, 91177 Thalmässing (DE); Müller, Bernhard, 91126 Schwabach (DE)
(74) Vertreter: FDST Patentanwälte

(56) Entgegenhaltungen:
- EP-A1- 1 378 778
- EP-A2- 0 432 681
- DE-U1-202004 004 817
- GB-A- 1 453 402
- US-A- 4 278 835
- US-A- 5 125 062
- US-A1- 2002 136 511
- US-A1- 2004 105 634
- US-B1- 6 226 430

## Beschreibung

Die Erfindung betrifft ein LWL-Kabel, insbesondere ein LWL-Schienenfußkabel.

Bei Bahntrassen werden entlang des Schienenfußes einer Schiene eines Gleises oftmals Kabel entlanggeführt, die teilweise als reine Daten- oder Kommunikationskabel ausgebildet sind.

Aufgrund ihrer Anordnung an oder im unmittelbaren Bereich einer Schiene sind diese Kabel einer erheblichen Belastung sowohl in mechanischer, thermischer als auch chemischer Hinsicht ausgesetzt.

Bei der Verwendung von Lichtwellenleitern für derartige Datenkabel müssen diese aufgrund ihrer hohen Empfindlichkeit daher besonders geschützt werden. So treten beispielsweise neben den sehr hohen Schwingungsbeanspruchungen beim Überfahren der Schienen mit einem Zug auch erhebliche Temperaturschwankungen auf, die zu Längsdehnungen und damit einer Belastung der Lichtwellenleitung beitragen können.

In einem anderen technischen Bereich, nämlich bei Seekabeln, ist die Verwendung von LWL-Kabeln ebenfalls bekannt. Aus der US 5,125,062 ist ein Beispiel für ein LWL-Seekabel zu entnehmen. Dieses weist einen zentralen LWL-Strang auf, der von wendelförmig verlaufenden Drähten umgeben ist. Die Drähte sind innerhalb einer Metallhülse geführt, die zur Stromversorgung von Repeatem vorgesehen ist.

Der Erfindung liegt die Aufgabe zugrunde, ein widerstandsfähiges Lichtwellenleiter-Kabel insbesondere für die Anordnung an einem Schienenfuß anzugeben.

Die Aufgabe wird gemäß der Erfindung gelöst durch ein Lichtwellenleiter-Kabel mit den Merkmalen des Anspruchs 1.

Durch die vorgesehene speziell ausgebildete Armierung mit den wendelförmig verlaufenden Metalldrähten, insbesondere verzinkte Stahldrähte, ist zum einen ein hoher Schutz der Lichtwellenleiter gegeben und gleichzeitig ist eine sehr hohe Flexibilität des gesamten Kabels beibehalten. Durch die nebeneinander anliegenden Stahldrähte ist eine insgesamt nach Art einer Hülse geschlossene Armierung, insbesondere bestehend aus lediglich einer Lage von Stahldrähten gebildet. Die einzelnen Stahldrähte liegen daher quasi lückenlos aneinander an. Durch die geschlossene wendelförmige Anordnung der als Runddrähte ausgebildeten Metalldrähte weist dieses Kabel besondere vorteilhafte Eigenschaften im Hinblick auf Temperaturschwankungen auf. Temperaturbedingte Dehnungen der einzelnen für das Kabel verwendeten Materialien, beispielsweise der Stahldrähte, führen nämlich nicht ausschließlich zu einer die Lichtwellenleiter belastenden Längsdehnung. Aufgrund der wendelförmigen Anordnung wird vielmehr lediglich ein Bruchteil der Längendehnung der einzelnen Drähte in eine Längsdehnung des Kabels umgesetzt. Ein Teil der temperaturbedingten Ausdehnung führt vielmehr zu einer Dickenausdehnung des Kabels, die im Hinblick auf die Belastung der Lichtwellenleiter unkritisch ist. Vielmehr wird lediglich der Kabelmantel etwas aufgeweitet.

Neben dieser vorteilhaften Eigenschaft bei Temperaturschwankungen bietet diese Armierung auch einen hohen mechanischen Schutz, insbesondere ist ein 100%iger Verbissschutz gegen beispielsweise Marderbisse erzielt.

Weiterhin ist um diese Stahldrähte noch ein Metallband, insbesondere ein verzinktes Stahlband gewendelt, welches die Festigkeit und damit die Schutzfunktion zusätzlich erhöht. Das Stahlband ist hierbei insbesondere gegenläufig gewendelt. Beim Herstellen übernimmt dieses Stahlband zugleich eine Fixierfunktion für die Stahldrähte. Durch die gegenläufige Wendelung des Stahlbands wird ein hoher Torsions- und Verdrehschutz des Kabels erzielt. Unter Metallband wird allgemein eine im Querschnitt flache Geometrie mit einem hohen Breiten- zu Dickenverhältnis verstanden. Dieses Breiten- zu Dickenverhältnis liegt beispielsweise deutlich über 10:1 und beispielsweise im Bereich von 100:1. Für das Stahlband wird hierbei ein dünnes Blech mit einer Blechdicke im Bereich von einem Bruchteil eines Millimeters, beispielsweise 0,1 mm, herangezogen.

Das Stahlband ist hierbei im Unterschied zu den Stahldrähten nach Art einer offenen Wicklung ausgebildet, bei denen einzelne Wicklungsabschnitte des Stahlbands bei gleicher Winkellage zueinander beabstandet sind. Der Abstand entspricht hierbei vorzugsweise in etwa der Breite des Stahlbands, wobei der Abstand prinzipiell auch einen Teil, beispielsweise die Hälfte oder ein Mehrfaches, beispielsweise das Doppelte der Breite des Metallbandes ausmachen kann.

Die einzelnen Metalldrähte weisen vorzugsweise eine Wendelsteigung auf, die etwa dem 6- bis 15-Fachen und insbesondere dem 9- bis 12-Fachen des von ihnen umwickelten Innendurchmessers entspricht. Neben diesen Bereichen hat sich auch der Bereich vom 8- bis 10-Fachen des umwickelten Innendurchmessers als vorteilhaft herausgestellt. Die Wendelsteigung einer helixförmig gewundenen Spirale wird alternativ auch als Ganghöhe oder Schlaglänge bezeichnet. Sie gibt den Abstand zweier Teilstücke des gleichen gewendelten Metalldrahts in Längsrichtung an, die diese beiden Teilstücke bei einem identischen Drehwinkel einnehmen. Durch diese spezielle Wendelsteigung wird auch bei hohen Temperaturunterschieden sichergestellt, dass nur eine geringe Längenausdehnung auftritt, welche die Lichtwellenleiter belasten könnte.

Die Breite des Stahlbands beträgt vorzugsweise ein Vielfaches des Durchmessers eines einzelnen Stahlrunddrahtes, insbesondere mehr als das 10-Fache und liegt beispielsweise bei 1 bis 2 cm.

Die Armierung ist vorzugsweise ausgebildet zwischen einem inneren Kabelmantel und einer äußeren Schutzhülle. Die äußere Schutzhülle dringt hierbei in den Abstand zwischen zwei Abschnitten des gewendelten Stahlbands ein. Hierdurch ist eine sehr hohe Zugfestigkeit in Längsrichtung durch einen intensiven Reibkontakt zwischen der Schutzhülle und der Armierung und insbesondere aufgrund eines Formschlusses zwischen der Schutzhülle und des Stahlbands ausgebildet. Für diese vorteilhafte Wirkung für die Zugfestigkeit ist die spezielle Anordnung mit dem inneren Kabelmantel nicht erforderlich.

Neben dieser sehr hohen Zugfestigkeit weist das Kabel durch die spezielle Stahlarmierung insgesamt auch eine hohe Querdruckfestigkeit auf. Gleichzeitig ist das Kabel durch die spezielle Ausgestaltung der Armierung sehr flexibel durch die Verwendung der Runddrähte.

Um die gewünschte Dickenausdehnung bei Temperaturunterschieden zu ermöglichen, ist gemäß einer zweckdienlichen Weiterbildung vorgesehen, dass die äußere Schutzhülle aus einem flexiblen Material ausgebildet ist, dessen Elastizität ausreicht, um die Dickenänderungen aufnehmen zu können. Als flexibles Material wird hierbei vorzugsweise ein flexibles Polyethylen niedriger oder auch mittlerer Dichte herangezogen.

Das Kabel ist insbesondere als ein für den Einsatz als Schienenfußkabel vorgesehenes Lichtwellenleiter-Kabel ausgebildet. Hierzu weist es zum einen mehrere Lichtwellenleiter-Stränge auf, die jeweils als eine Bündelader mit mehreren Lichtwellenleiter-Fasern ausgebildet sind. Weiterhin sind mehrere dieser Bündeladern vorzugsweise in lediglich einer Lage, um ein Zentralelement (metallfrei, im Hinblick auf die Datenübertragung funktionslos) angeordnet. Die Bündeladern sind von einer insbesondere abdichtenden Umwicklung umgeben, um diese Umwicklung sind wiederum Zugentlastungsstränge gewickelt und schließlich sind diese wiederum von einem Dichtband, insbesondere Aluminiumband eingeschlossen. Dieser gesamte Aufbau ist dann schließlich von einem inneren Kabelmantel umgeben, um den die Armierung und die Schutzhülle angebracht sind.

Das Kabel ist insgesamt vorzugsweise längswasserdicht und/oder querwasserdicht ausgebildet. Zur Gewährleistung der Längsdichtigkeit im Kabelinneren sind vorzugsweise ein Gel und/oder ein quellfähiges Material eingebracht. So wird beispielsweise der Zwischenraum zwischen den einzelnen Lichtwellenleiter-Fasern einer Bündelader mit einem geeigneten Gel verfüllt. Der Zwischenraum zwischen den einzelnen Bündeladern innerhalb des inneren Kabelmantels wird beispielsweise mit einem so genannten Petrolat oder sonstigen quellfähigen Stoffen, die in Gegenwart von Wasser aufquellen, verfüllt. Weiterhin ist als Bewicklung ein so genanntes Quellvlies vorgesehen, welches bei Eindringen von Feuchtigkeit auf quillt. Zur Gewährleistung der Querdichtigkeit ist das Aluminiumband vorgesehen. Hierzu wird das Aluminiumband um den Kabelaufbau geführt und in einem überlappenden Bereich verklebt. Üblicherweise ist das Aluminiumband mit einem Copolymerisat beschichtet, wodurch das Aluminiumband insbesondere auch mit dem umgebenden inneren Kabelmantel, der vorzugsweise aus Polyethylen ist, verklebt. Dieser Aufbau ist auch als "Schichtenmantel" bekannt.

Die Aufgabe wird gemäß der Erfindung weiterhin gelöst durch eine Schiene, insbesondere Bahnschiene, mit einem derartigen Lichtwellenleiter-Kabel, welches an einem Schienenfuß der Bahnschiene angeordnet ist. Gemäß einer zweckdienlichen Ausgestaltung ist zusätzlich zum Lichtwellenleiter-Kabel ein weiteres Kabel, insbesondere ein Signalkabel, parallel zum Lichtwellenleiter-Kabel geführt. Dieses Kabel ist dabei insbesondere herkömmlicher Bauart und mit einzelnen Kupfer-Leitern versehen. Dieses Signalkabel weist typischerweise einen größeren Außendurchmesser als das Lichtwellenleiter-Kabel aus, welches im Unterschied zu dem Signalkabel als Datenkabel ausgebildet ist. Im Bahnbereich liegen bei Signalkabeln Spannungen bis etwa 400 Volt an, wohingegen bei Datenkabeln deutlich niedrigere Spannungen, beispielsweise lediglich bis 60 Volt anliegen.

Zweckdienlicherweise sind die beiden Kabel hierbei mit Hilfe einer gemeinsamen so genannten Schienenfußklammer am Schienenfuß der Schiene befestigt. Vorzugsweise weist hierbei die Schienenfußklammer einen gemeinsamen Aufnahme- oder Klemmraum für die beiden Kabel auf, in dem diese Kabel einliegen. Hierdurch ist eine sehr einfache Befestigung der beiden Kabel am Schienenfuß ermöglicht. Zugleich erlaubt diese Ausgestaltung die Verwendung von standardisierten, herkömmlichen Signalkabeln parallel zu dem neuartigen Lichtwellenleiter-Datenkabel.

Ein Ausführungsbeispiel der Erfindung wird nachfolgend anhand der Figuren näher erläutert. Diese zeigen in teilweise stark vereinfachten schematischen Darstellungen:
- Fig. 1.: einen Querschnitt durch ein Lichtwellenleiter-Kabel,
- Fig. 2: eine ausschnittsweise Seitenansicht auf eine Armierung des Lichtwellenleiter-Kabels gemäß Fig. 1, und

- Fig. 3: eine vereinfachte Querschnittsdarstellung einer Bahnschiene mit daran mittels einer Schienenfußklammer angebrachten Lichtwellenleiter-Kabel sowie Signalkabel.

In den Figuren sind gleich wirkende Teile mit den gleichen Bezugszeichen versehen.

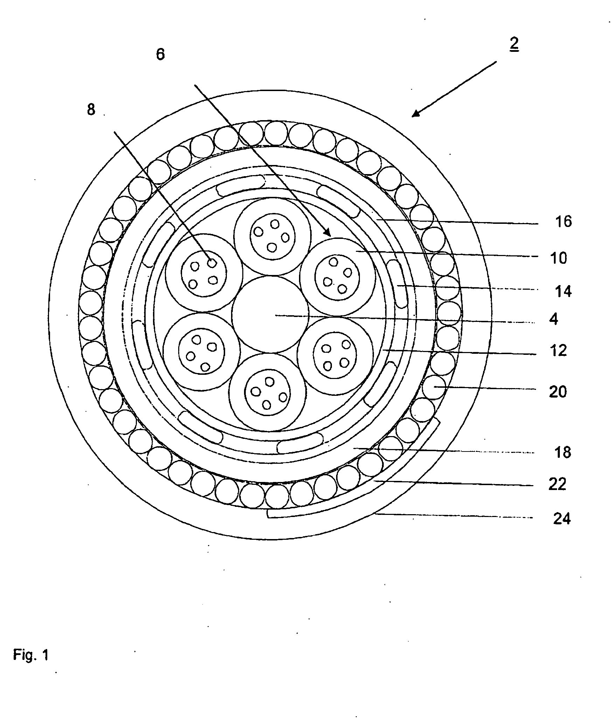

In Fig. 1 ist ein Lichtwellenleiter-Schienenfußkabel 2 gezeigt. Dieses umfasst ein insbesondere metallfreies Zentralelement 4, beispielsweise einen massiven Kunststoffstrang, welches Zentralelement im Ausführungsbeispiel konzentrisch von insgesamt sechs Lichtwellenleiter-Bündeladern 6 umgeben ist. Jede Bündelader 6 weist mehrere Lichtwellenleiter-Fasern 8 auf. Die vier Fasern 8 sind von einem gemeinsamen Mantel 10, vorzugsweise ein Polyamidmantel umgeben. Der Innenhohlraum zwischen den Fasern 8 ist zur Abdichtung in Längsrichtung mit einer Dichtmasse verfüllt. Diese ist vorzugsweise ein geeignetes Gel. Das Zentralelement 4 und die einzelnen Bündeladern 6 weisen in etwa den gleichen Außendurchmesser auf, der beispielsweise im Bereich von 2 mm liegt. Der Innendurchmesser des Mantels 10 der Bündelader 6 liegt lediglich bei etwa 1,2 bis 1,4 mm.

Die Bündeladern 6 und das Zentralelement 4 sind von einer gemeinsamen Umwicklung 12 (Bewicklung) umgeben, die vorzugsweise nach Art eines Vlieses ausgebildet ist. Vorzugsweise ist es ein so genanntes Quellvlies, welches bei Eindringen von Feuchtigkeit aufquillt. Zur Längswasserabdichtung kann auch eine Petrolat-Füllung eingesetzt werden. Um diese Umwicklung 12 herum sind zur Zugentlastung mehrere auch als Rovings bezeichnete Zugentlastungsstränge 14 gewickelt, insbesondere Aramidstränge oder Glasgarne. Die einzelnen Stränge 14 bestehen hierbei aus jeweils einer Vielzahl von Aramidfäden. Um diese Zugentlastungsstränge 14 ist ein hülsenartig ausgebildetes Aluminiumband 16 gelegt, welches zur Querabdichtung dient. Um das Aluminiumband 16 herum ist ein innerer Kabelmantel 18 ausgebildet, welcher beispielsweise aus PE gebildet ist und eine Wanddicke >1,5 mm (bis etwa 3 mm) aufweist. Der Durchmesser dieses Kabelmantels liegt im Ausführungsbeispiel im Bereich von 10 bis 15 mm.

Anliegend an der Außenseite dieses inneren Kabelmantels 18 ist eine Armierung ausgebildet. Diese besteht im Ausführungsbeispiel aus einer Lage verzinkter Stahlrunddrähte 20, die aneinander angrenzend wendelförmig um den inneren. Kabelmantel 18 geführt sind. Um diese aus den im Wesentlichen lückenlos nebeneinander angeordneten Runddrähten gebildete Hülse ist ergänzend ein gegenläufig gewendeltes Stahlband 22 (Gegenwendel) angeordnet. Dieses Stahlband 22 weist eine Stärke vorzugsweise im Bereich von etwa 0,1 mm auf. Die Breite b des Stahlbands liegt vorzugsweise im Bereich zwischen 1 und 2 cm. Das Stahlband 22 ist um die Stahldrähte 20 derart gewickelt, dass zwei in Längsrichtung benachbarte Abschnitte des Stahlbandes voneinander beabstandet sind. Durch die durch das Stahlband 22 gebildete Gegenwendel ist das Kabel 2 insgesamt sehr torsionsfest, weist jedoch zugleich in Längsrichtung nur eine geringe Steifigkeit auf, ist also insgesamt flexibel und kann entlang von vorgegebenen Biegeradien gebogen und verlegt werden.

Um die Armierung ist eine äußere Schutzhülle oder ein äußerer Kabelmantel 24 ausgebildet. Als Werkstoff wird hier vorzugsweise ein flexibles Polyethylen niedriger/mittlerer Dichte (LD/MPE) verwendet. Das gesamte Kabel 2 weist etwa einen Außendurchmesser im Bereich von 15 bis 20 mm auf.

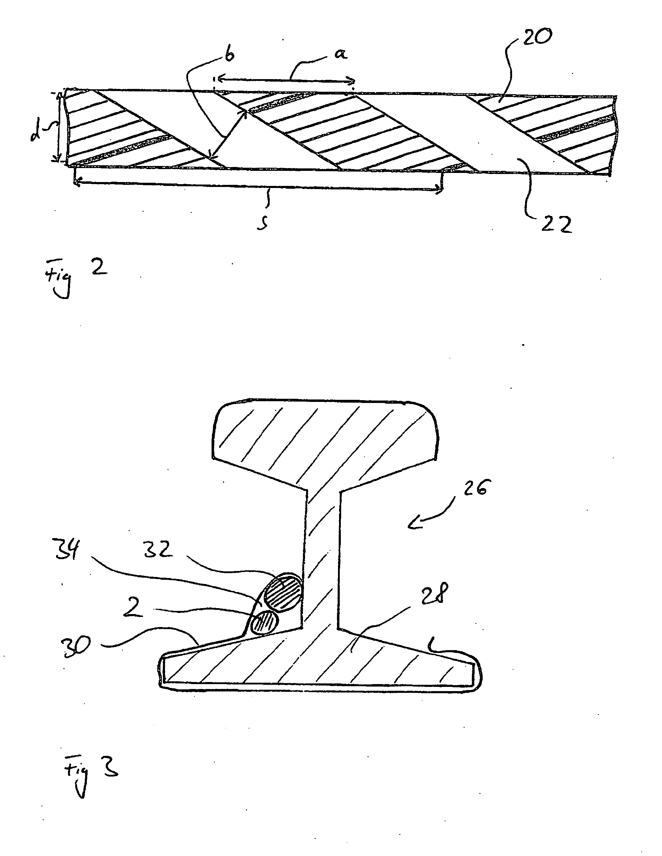

Aus der Seitendarstellung der Fig. 2, die das Kabel 2 ohne den äußeren Kabelmantel 24 zeigt, ist sehr gut die wendelförmige Anordnung der einzelnen Stahldrähte 20 sowie das hierzu gegenläufig gewendelte Stahlband 22 zu erkennen. Die Fig. 2 zeigt die aus den Stahldrähten 20 und dem Stahlband 22 gebildete Armierung lediglich in einer schematischen Darstellung ohne Anspruch auf maßstabsgetreue Wiedergabe zu erheben.

Die einzelnen Stahldrähte 20 sind um den inneren Kabelmantel 18 helixförmig gewickelt und bilden durch ihre geschlossene Anordnung eine geschlossene Ar mierungsoberfläche. Die Stahldrähte 20 sind entsprechend einer Wendelsteigung s um den inneren Kabelmantel 18 gewickelt. Zur Illustration der Wendelsteigung s ist beispielhaft einer der helixförmig gewickelten Stahldrähte 20 hervorgehoben. Die Wendelsteigung wird bei helixförmig gewundenen Verdrillungen auch als Ganghöhe oder Schlaglänge bezeichnet. Bei dem hier vorgestellten Lichtwellenleiter-Kabel 2 beträgt die Wendelsteigung s etwa das 6- bis 15-Fache des Außendurchmessers d des inneren Kabelmantels 18.

Wie weiterhin aus der Fig. 2 zu erkennen ist, ist um die einzelnen Stahldrähte 20 im Ausführungsbeispiel lediglich ein einzelnes Stahlband 22 gegenläufig gewendelt. Das Stahlband ist also ein um die Stahldrähte 20 gewendelt geführter Blechstreifen aus vorzugsweise verzinktem Stahl. Einzelne Abschnitte des Stahlbands 22 sind voneinander beabstandet. Der Abstand a zwischen zwei benachbarten Teilabschnitten liegt im Bereich der Breite des Stahlbands 22 und beträgt beispielsweise das 0,5- bis 3- oder 5-Fache der Breite b des Stahlbands.

Aufgrund des Abstands a sind zwischen einander benachbarten Teilabschnitten des Stahlbands 22 Vertiefungen gebildet, in die beim Extrudieren der Schutzhülle 24 Material eindringt, wie dies insbesondere auch aus der Fig. 1 zu entnehmen ist. Hierdurch ist eine sehr hohe Zugfestigkeit in Längsrichtung erreicht.

Das Lichtwellenleiter-Kabel 2 ist insbesondere zur Anordnung an einer Schiene 26 einer Bahntrasse vorgesehen. In Fig. 3 ist beispielhaft eine Querschnittsdarstellung einer solchen Schiene 26 gezeigt. Das Lichtwellenleiter-Kabel 2 wird an einem so genannten Schienenfuß 28 verlegt. Die Befestigung erfolgt vorzugsweise mit Hilfe einer so genannten Schienenfußklammer 30, die den Schienenfuß umgreift. Die Schienenfußklammer 39 ist hierbei ein Metallband, beispielsweise aus Federstahl, welches regelmäßig in gewissen Abständen an dem Schienenfuß 28 angeordnet ist.

Im Ausführungsbeispiels der Fig. 3 ist eine gemeinsame Anordnung des Lichtwellenleiter-Kabels 2 zusammen mit einem herkömmlichen Kabel, insbesondere ein Kupfer-Signalkabel 32, vorgesehen. Hierzu weist die Schienenfußklammer 30 einen Aufnahmeraum 34 auf, in dem das Signalkabel 32 und das Lichtwellenleiter-Kabel 2 gemeinsam einliegen. Durch die Schienenfußklammer 30 kann ein herkömmliches Signalkabel 32 gemeinsam mit dem neuartigen Lichtwellenleiter-Kabel 2 problemlos am Schienenfuß 28 entlang verlegt werden. Das Signalkabel 32 weist üblicherweise einen größeren Durchmesser auf als das Lichtwellenleiter-Kabel 2. Die einzelnen Kupferleiter sind beim Signalkabel 32 vorzugsweise als flexible, biegbare Litzenleiter ausgebildet.

Bezugszeichenliste
- 2: Lichtwellenleiter-Kabel
- 4: Zentralelement
- 6: Bündelader
- 8: Lichtwellenleiter-Faser
- 10: Mantel
- 12: Umwicklung
- 14: Zugentlastungsstrang
- 16: Aluminiumband
- 18: innerer Kabelmantel
- 20: Stahldrähte
- 22: Stahlband
- 24: Schutzhülle
- 26: Schiene
- 28: Schienenfuß
- 30: Schienenfußklammer
- 32: Signalkabel
- 34: Aufnahmeraum

- a: Abstand
- b: Breite Stahlband
- d: Außendurchmesser
- s: Wendelsteigung

## Patentansprüche

1. Lichtwellenleiter-Kabel **(2),** insbesondere Schlenenfußkabel zur Anordnung an einem Schienenfuß (28) einer Schiene (26) einer Bahntrasse, mit zumindest einer längs- und/oder querwasserdicht geführten Bündelader (6) mit mehreren Lichtwellenleiterfasem (8), mit einer Armierung (20, 22), die aneinander anliegende und wendelförmig verlaufende Metalldrähte (20) und ein um diese gewendeltes Metallband (22) umfasst, sowie mit einem inneren Kabelmantel (18) und einer äußeren Schutzhülle (24), zwischen denen die Armierung (20, 22) ausgebildet ist, wobei In Längsrichtung des Kabels (2) nebeneinander angeordnete Wicklungsabschnitte des Metallbandes (22) zueinander beabstandet sind.

2. Lichtwellenleiter-Kabel (2) nach Anspruch 1,
bei dem das Metallband (22) gegenläufig zu den Metalldrähten (20) gewendelt ist.

3. Lichtwellenleiter-Kabel (2) nach Anspruch 1 oder 2,
bei dem die Metalldrähte (20) und/oder das Metallband (22) aus insbesondere verzinktem Stahl bestehen.

4. Lichtwellenleiter-Kabel (2) nach einem der vorhergehenden Ansprüche,
bei dem die Metalldrähte (20) eine Wendelsteigung (s) aufweisen, die etwa dem 6 bis 15-Fachen und insbesondere dem 9- bis 12-Fachen des von ihnen umwickelten Innendurchmessers entspricht.

5. Lichtwellenleiter-Kabel (2) nach einem der Ansprüche 2 bis 4,
bei dem die Breite (b) des Metallbandes (22) etwa **im** Bereich zwischen 1 bis 2 cm liegt.

6. Lichtwellenleiter-Kabel (2) nach einem der vorhergehenden Ansprüche,
bei dem der Abstand (a) der Wicklungsabschnitte etwa der Breite (b) des Metallbands (20) entspricht.

7. Lichtwellenleiter-Kabel (2) nach einem der vorhergehenden Ansprüche,
bei dem die Armierung zwischen einem inneren Kabelmantel (18) und der äußeren Schutzhülle (24) derart ausgebildet ist, dass die äußere Schutzhülle in den Abstand zwischen Abschnitten des gewendelten Metallbandes (22) eindringt.

8. Lichtwellenleiter-Kabel (2) nach einem der vorhergehenden Ansprüche,
wobei die äußere Schutzhülle (24) aus einem flexiblen Material ausgebildet ist, insbesondere aus einem flexiblen Polyethylen niedriger / mittlerer Dichte.

9. Lichtwellenleiter-Kabel (2) nach einem der vorhergehenden Ansprüche,
bei dem mehrere Bündeladern (6) um ein Zentralelement (4) angeordnet und diese von innen nach außen von einer Umwicklung (12), von Zugentlastungssträngen (14) von einem metallischen Dichtband (16) sowie von einem inneren Kabelmantel (18) umgeben sind.

10. Lichtwellenleiter-Kabel (2) nach einem der vorhergehenden Ansprüche,
bei dem mehrere Lichtwellenleiterstränge (6) von einem inneren Kabelmantel (18) umgeben sind und innerhalb des inneren Kabelmantels (18) längswasserdicht und/oder querwasserdicht geführt sind.

11. Lichtwellenleiter-Kabel (2) nach Anspruch 10,
bei dem zur Gewährleistung der Längsdichtigkeit im Kabelinnem ein Gel und/ oder ein quellfähiges Material eingebracht ist und zur Gewährleistung der Querdichtigkeit ein metallisches Dichtband (16) vorgesehen ist.

12. Schiene (26), insbesondere Bahnschiene, mit einem Lichtwellenleiter-Kabel (2) nach einem der vorhergehenden Ansprüche, das an einem Schienenfuß (28) angeordnet ist

13. Schiene (26) nach Anspruch 12,
bei der zusätzlich zum Lichtwellenleiter-Kabel (2) ein weiteres Kabel, insbesondere ein Signalkabel (32), parallel zum Lichtwellenleiter-Kabel (2) geführt ist.

14. Schiene (26) nach Anspruch 13,
bei der die Kabel (2,32) mit Hilfe einer gemeinsamen Schienenfußklammer (30) am Schienenfuß (28) befestigt sind und hierzu die Schienenfußklammer (30) einen gemeinsamen Aufnahmeraum (34) für die beiden Kabel (2,32) umfasst, in dem diese einliegen.

## Claims

1. A fibre-optic cable (2), in particular a rail-base cable, to be arranged on a rail base (28) of a rail (26) of a railway line, with at least one bundle conductor (6) guided in a longitudinally and/or transversely watertight manner, with several optical fibres (8), with an armouring (20, 22) comprising metal wires (20) contacting each other and extending helically, and a metal tape (22) coiled around said metal wires (20), as well as with an inner cable jacket (18) and an outer protective covering (24), between which the armouring (20, 22) is formed, wherein winding sections of the metal tape (22) which are arranged one beside the other in longitudinal direction of the cable (2) are spaced from each other.

2. The fibre-optic cable (2) of claim 1,
wherein the metal tape (22) is coiled in the opposite direction of the metal wires (20).

3. The fibre-optic cable (2) of claim 1 or 2,
wherein the metal wires (20) and/or the metal tape (22) consist of steel, in particular galvanized steel.

4. The fibre-optic cable (2) of any of the preceding claims,
wherein the metal wires (20) have a helical pitch (s) which corresponds to approximately the 6 to 15-fold, and in particular the 9 to 12-fold of the inner diameter around which they are wound.

5. The fibre-optic cable (2) of any of claims 2 to 4,
wherein the width (b) of the metal tape (22) lies approximately in the range of 1 to 2 cm.

6. The fibre-optic cable (2) of any of the preceding claims,
wherein the spacing (a) of the winding sections is approximately equal to the width (b) of the metal tape (22).

7. The fibre-optic cable (2) of any of the preceding claims,
wherein the armouring between an inner cable jacket (18) and the outer protective covering (24) is configured such that the outer protective covering penetrates into the spacing between sections of the coiled metal tape (22).

8. The fibre-optic cable (2) of any of the preceding claims,
wherein the outer protective covering (24) is made of a flexible material, in particular of a flexible polyethylene of low/mean density.

9. The fibre-optic cable (2) of any of the preceding claims,
wherein several bundle conductors (6) are arranged around a central element (4) and are surrounded, from inside out, by a wrapping (12), by strain-relief strands (14), by a metallic sealing tape (16), as well as by an inner cable jacket (18).

10. The fibre-optic cable (2) of any of the preceding claims,
wherein several fibre-optic strands (6) are surrounded by an inner cable jacket (18) and are guided within the inner cable jacket (18) In a longitudinally and/or transversely watertight manner.

11. The fibre-optic cable (2) of claim 10,
wherein a gel and/or a swellable material is placed inside the cable to guarantee the longitudinal tightness and a metallic sealing tape (16) is provided to guarantee the transverse tightness.

12. A rail (26), in particular a railway rail, with a fibre-optic cable (2) of any of the preceding claims, which is arranged on a rail base (28).

13. The rail (26) of claim 12,
wherein, in addition to the fibre-optic cable (2), another cable, in particular a signal cable (32), is guided in parallel to the fibre-optic cable (2).

14. The rail (26) of claim 13.
wherein the cables (2, 32) are fastened on the rail base (28) by means of a common rail-base clamp (30) and the rail-base clamp (30) comprises for that purpose a common reception space (34) for the two cables (2, 32), in which said cables (2, 32) lie.

## Revendications

1. Câble à fibres optiques (2), notamment câble de patin de rail, à être disposé sur un patin de rail (28) d'un rail (26) d'un tracé d'une ligne de chemin de fer, avec au moins un conducteur en faisceaux (6) guidé de manière étanche à l'eau longitudinalement et/ou transversalement, avec plusieurs fibres optiques (8), avec une armure (20, 22) comprenant des fils métalliques (20) en contact l'un avec l'autre et s'étendant hélicoïdalement, et un ruban métallique (22) enroulé autour des dits fils métalliques (20), ainsi qu'avec une gaine intérieure de câble (18) et une envelope protectrice extérieure (24), entre lesquelles l'armure (20, 22) est formée, dans lequel des sections d'enroulement du ruban métallique (22) qui sont disposées l'une à côté de l'autre en direction longitudinale du câble (2) sont espacées l'une de l'autre.

2. Câble à fibres optiques (2) selon la revendication 1,
dans lequel le ruban métallique (22) est enroulé en direction opposée des fils métalliques (20).

3. Câble à fibres optiques (2) selon la revendication 1 ou 2,
dans lequel les fils métalliques (20) et/ou le ruban métallique (22) se compose d'acier, notamment d'acier galvanisé.

4. Câble à fibres optiques (2) selon l'une quelconque des revendications précédentes,
dans lequel les fils métalliques (20) ont un pas hélicoïdal (s) qui correspond à environ 6 à 15 fois, et notamment à 9 à 12 fois le diamètre intérieur autour duquel ils sont enroulés.

5. Câble à fibres optiques (2) selon l'une quelconque des revendications 2 à 4,
dans lequel la largeur (b) du ruban métallique (22) est environ dans la gamme de 1 à 2 cm.

6. Câble à fibres optiques (2) selon l'une quelconque des revendications précédentes,
dans lequel l'espacement (a) des sections d'enroulement est environ égal à la largeur (b) du ruban métallique (22).

7. Câble à fibres optiques (2) selon l'une quelconque des revendications précédentes,
dans lequel l'armure entre une gaine intérieure de câble (18) et l'envelope protectrice extérieure (24) est configurée de manière que l'envelope protectrice extérieure pénètre dans l'espacement entre les sections du ruban métallique (22) enroulé.

8. Câble à fibres optiques (2) selon l'une quelconque des revendications précédentes,
dans lequel l'envelope protectrice extérieure (24) est faite d'un matériau flexible, notamment d'un polyéthylène flexible basse/moyenne densité.

9. Câble à fibres optiques (2) selon l'une quelconque des revendications précédentes,
dans lequel plusieurs conducteurs en faisceaux (6) sont disposés autour d'un élément central (4) et sont entourés, de l'intérieur vers l'extérieur, par un gulpage (12), par des cordes de décharge de traction (14), par un ruban métallique d'étanchéité (16), ainsi que par une gaine intérieure de câble (18).

10. Câble à fibres optiques (2) selon l'une quelconque des revendications précédentes,
dans lequel plusieurs cordes à fibres optiques (6) sont entourées par une gaine intérieure de câble (18) et sont guidées à l'intérieur de la gaine intérieure de câble (18) de manière étanche à l'eau longitudinalement et/ou transversalement.

11. Câble à fibres optiques (2) selon la revendication 10,
dans lequel un gel et/ou un matériau gonflable est mis à l'intérieur du câble pour garantir l'étanchéité longitudinale et un ruban métallique d'étanchéité (16) est prévu pour garantir l'étanchéité transversale.

12. Rail (26), notamment rail de chemin de fer, avec un câble à fibres optiques (2) selon l'une quelconque des revendications précédentes, qui est disposé sur un patin de rail (28).

13. Rail (26) selon la revendication 12,
dans lequel, in plus du câble à fibres optiques (2), un autre câble, notamment un câble de signalisation (32), est guidé en parallèle au câble à fibres optiques (2).

14. Rail (26) selon la revendication 13,
dans lequel les câbles (2, 32) sont fixés au patin de rail (28) au moyen d'une bride de patin de rail (30) commune et la bride de patin de rail (30) comprend à cette fin un espace de réception (34) pour les deux câbles (2, 32), dans lequel se trouvent dits câbles (2, 32).
